# EUROPEAN PATENT APPLICATION

(11) **EP 4 494 816 A2**
(43) Date of publication of application: **22.01.2025**
(21) Application number: 24218776.3
(22) Date of filing: 31.10.2019
(51) Int. Cl.: B25B 21/02

(54) **SOCKET-SHAFT CONNECTION ASSEMBLY OF PNEUMATIC IMPACT WRENCH**

(62) Divisional of application: 19829298.9
(71) Applicant: Dino Paoli S.r.l., 42124 Reggio Emilia (IT)
(72) Inventor: PAOLI, Francesca, 42123 Reggio Emilia (IT)
(74) Representative: Luppi Intellectual Property S.r.l.

(57) **Abstract**

A socket-holding shaft for motorsport pneumatic impact wrench (2) is arranged to receive a socket (4) along an axis thereof (X) and is provided with:
- a grooved profile (P3) arranged to cooperate with a respective grooved profile (P4) of the socket (4) for torque transmission between the socket-holding shaft (3) and the socket (4);
- a socket-holding end (9) conformed to receive a fixing element (5) along the axis (X) to connect the socket (4) to the socket-holding shaft (3);
- a coupling conical surface (A) arranged to couple with a correspondent conical surface (B2) on the socket (4) for centering the socket (4), wherein the coupling conical surface (A) is distinct from the grooved profile (P3).

## Description

The invention relates to a shaft for pneumatic impact wrenches for the motorsport sector, used in car competitions.

In order to limit the pit-stop time, which can in many cases be critical to the result of a car competition, motorsport pneumatic impact wrenches must exhibit extremely high performance in terms of speed of rotation and mechanical resistance.

Presently the socket-shaft coupling in pneumatic impact wrenches for the motorsport sector is obtained by a square profile of the wrench shaft that couples with a square hole provided on a socket connection portion. The socket is constrained on the shaft by a transverse pin, with an axis orthogonal to the shaft axis.

When this type of coupling is subjected to a high number of revolutions, even more than 10,000 rpm, it produces vibrations on the shaft and swinging of the socket.

This results in the operator having to manually compensate the generated vibrations and swinging to keep the wrench in axis with the nut during operations for screwing and unscrewing the wheel from its hub, with the consequent risk that the nut is not sufficiently clamped and that pit-stop times are excessive. Obviously, risks for the health of the operator handling the motorsport wrench that can arise due to prolonged use of the wrench itself must be taken in consideration. Furthermore, as they are submitted to high stresses, the socket and the socket-holding shaft are exposed to break and high wear even due to vibrations. An object of the invention is to improve coupling between socket and shaft of a motorsport pneumatic impact wrench.

A further obj ect is to improve clamping between socket and shaft in a motorsport pneumatic impact wrench.

Still a further object is to reduce or even overcome problems related to the use of the square profile in the socket-shaft coupling of traditional type.

Another object is to provide a shaft that fulfils the needs for efficient torque transmission and high mechanical resistance required in the motorsport sector.

Still another object is to obtain a socket-shaft coupling enabling to quickly mount and remove the socket.

According to the invention it is provided a socket-holding shaft for motorsport pneumatic impact wrench arranged to receive a socket along an axis thereof, characterized in that it is provided with:
- a grooved profile arranged to cooperate with a respective grooved profile of said socket for torque transmission between said socket-holding shaft and said socket;
- a socket-holding end conformed to receive a fixing element along said axis to connect said socket to said socket-holding shaft;
- a coupling conical surface arranged to couple with a correspondent conical surface on said socket for centering said socket,
wherein said coupling conical surface is distinct from said grooved profile.

Owing to the coupling by means of grooved profiles of the socket-holding shaft and of the socket and to conical surfaces, the torque transmission is obtained on assembly sections that are different from those enabling centering of the various assembly components. This allows to optimize the socket-shaft coupling since grooved profiles can substantially carry out the only torque transmission between socket-holding shaft and socket, thereby making such transmission relatively efficient. Furthermore, conical surfaces allow to obtain a highly precise centering, thus significantly reducing or even removing generation of swinging determined by eccentricity or axial off-set due to mounting.

The invention shall be better understood and implemented referring to the enclosed drawings which illustrate an exemplifying and non-limiting embodiment thereof, wherein:
Figure 1 is a rear perspective view of a plurality of elements of a socket-shaft connection assembly intended to be mounted on a pneumatic impact wrench for the motorsport sector;
Figure 2 is a front perspective and enlarged view of a socket-holding shaft provided between the plurality of elements of Figure 1;
Figure 3 is a side view of a motorsport pneumatic impact wrench wherein an exploded socket-shaft connection assembly is shown;
Figure 4 is a longitudinal section of the wrench of Figure 3 in a configuration wherein the assembly is mounted on the pneumatic impact wrench;
Figure 5 is a side view of the socket-holding shaft of Figure 2;
Figure 6 is a section of Figure 5 taken along an axial plane of the socket-holding shaft;
Figure 6A is a partial transversal section of a surface portion of the socket-holding shaft taken along the VI-VI plane of Figure 6;
Figure 7 is a front enlarged perspective view of a fixing element provided in the plurality of elements of Figure 1;
Figure 8 is a side enlarged view of the fixing element of Figure 7;
Figure 9 is an axial section of the fixing element of Figure 7;
Figure 10 is a side partially sectioned view of a socket provided in the socket-shaft connection assembly;
Figure 11 is a section taken along the XI-XI plane of Figure 10;
Figure 11A is a detail of Figure 11;
Figure 12 is an axial section of the socket-shaft connection assembly in a connected configuration.

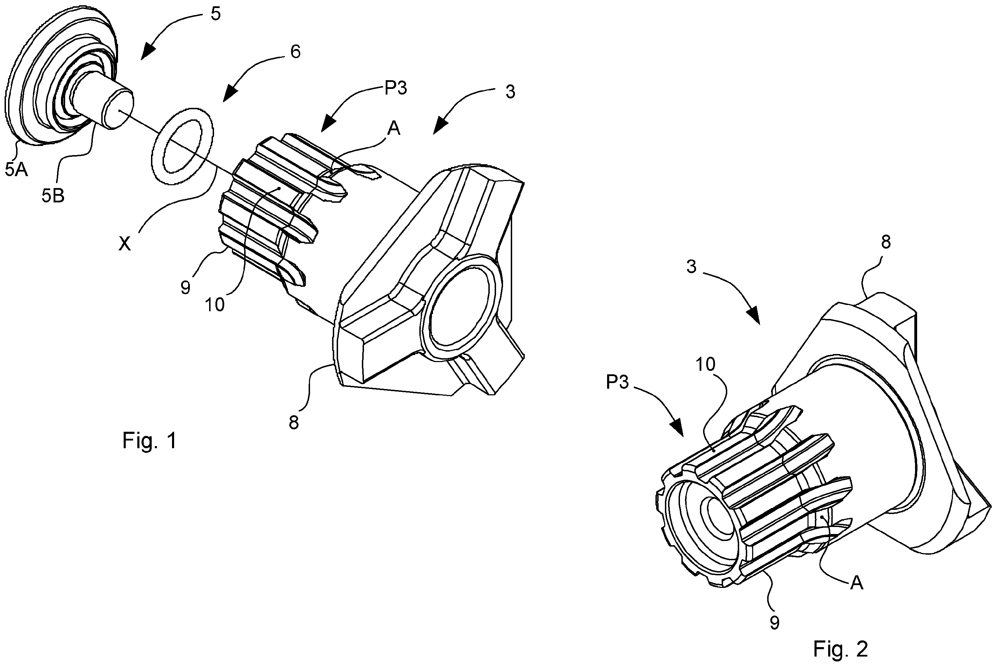

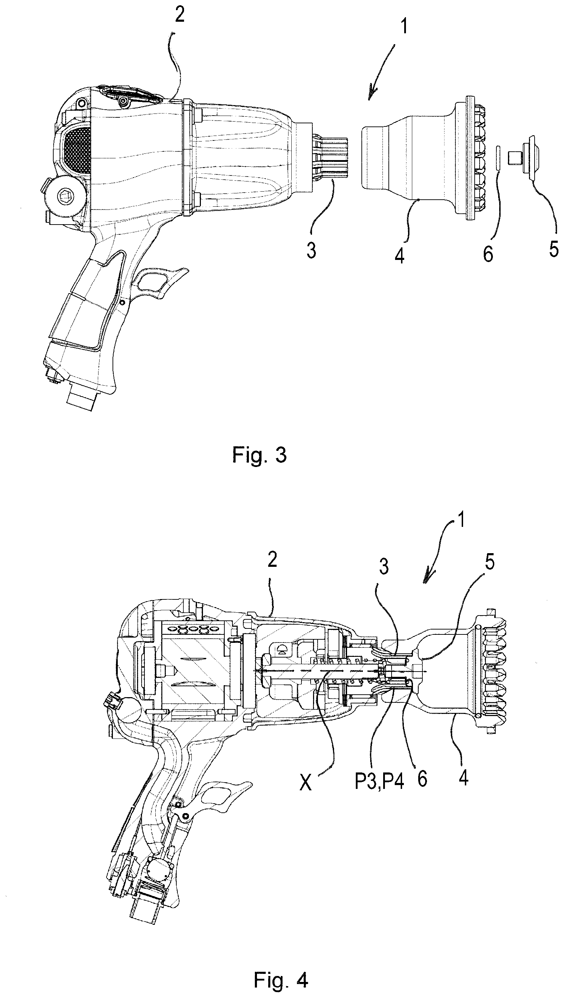

Referring to Figure 3 and Figure 1, a socket-shaft connection assembly 1 for motorsport pneumatic impact wrench 2 comprises a socket-holding shaft 3, a socket 4 and a fixing element 5 for connecting the socket 4 to the socket-holding shaft 3 along an axis X of the socket-holding shaft 3. As shown in Figure 1, a retaining member 6 may be present, for example an O-Ring, which is arranged between the fixing element 5 and the socket-holding shaft 3 when the socket 4 is mounted on the socket-holding shaft 3. The illustrated socket 4 is of the type used to screw or unscrew wheel nuts for competition cars, for example Formula 1, fixed to the hub thereof by means of a single central nut, but it can be of a different type, for example for wheels fixed to the hub by means of a plurality of nuts.

The socket-holding shaft 3 and the socket 4 comprise respective grooved profiles P3, P4 (Figure 4) cooperating for torque transmission between the socket-holding shaft 3 and the socket 4 when the impact wrench 2 is in function.

The fixing element 5 is conformed to exert a force in the direction of the axis X of the socket-holding shaft 3 to connect the socket 4 to the socket-holding shaft 3 itself.

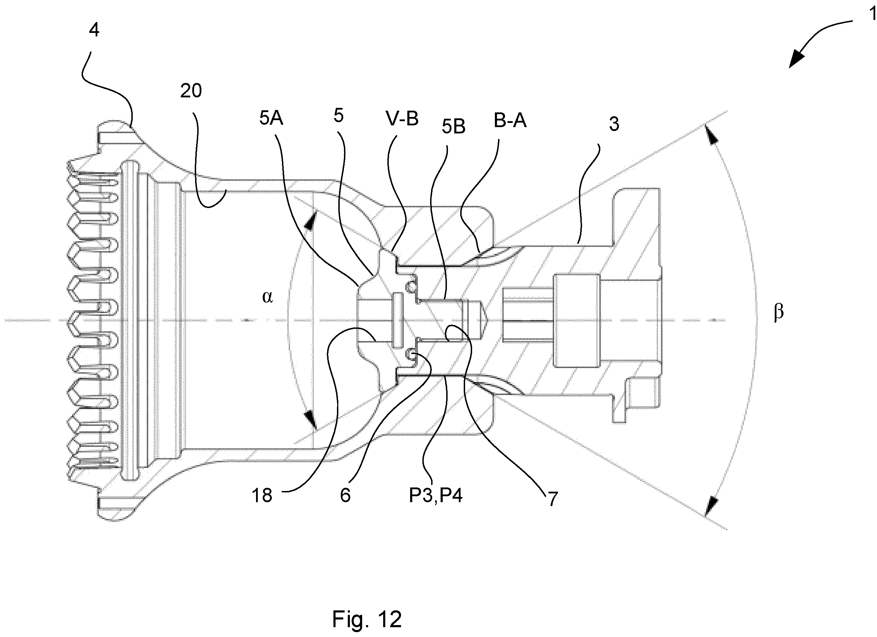

The centering of the socket 4 on the socket-holding shaft 3 occurs by means of a plurality of coupling conical surfaces V-B, B-A (Figure 12), obtained respectively on the fixing element 5, on the socket-holding shaft 3 and on the socket 4. The coupling conical surfaces are distinct from the grooved profiles P3, P4.

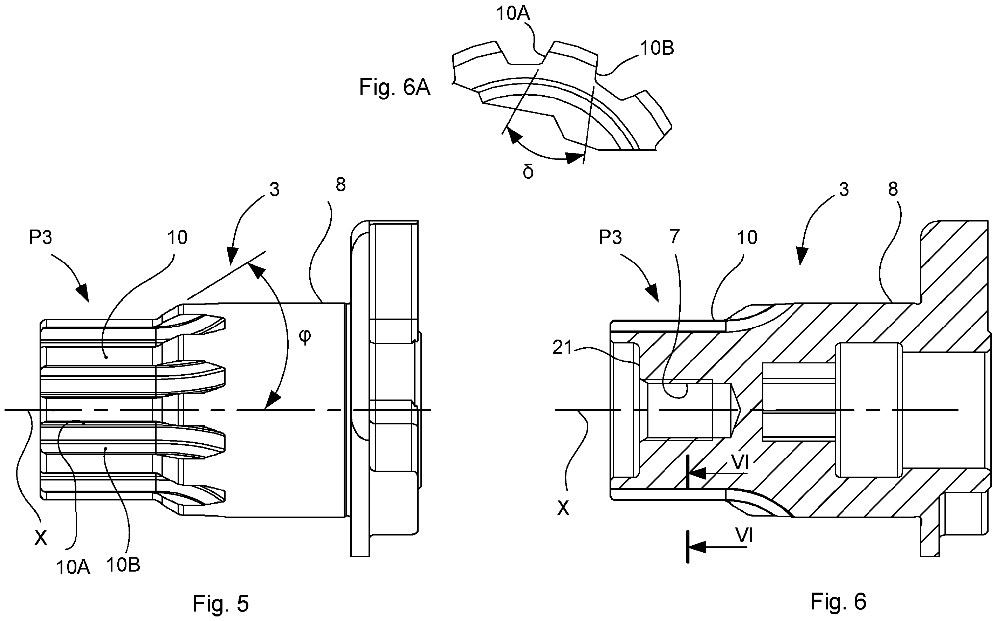

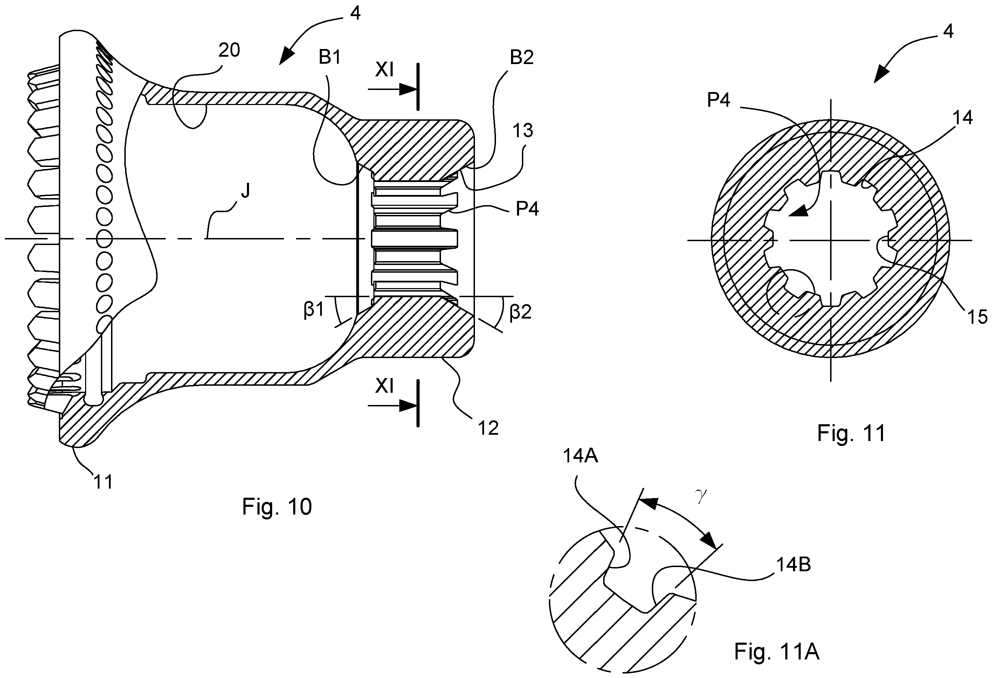

Referring to Figures 2, 5 and 6, the socket-holding shaft 3 comprises a driving end 8 with which it is connected in a known way, thus not herein described, to the shaft of the pneumatic impact wrench 2 by which it is rotated about its own axis X. The socket-holding shaft 3 further comprises a socket-holding end 9, arranged to receive the socket 4 and on which the grooved profile P3 is obtained. The grooved profile P3 comprises a plurality of teeth 10, ten in number in the illustrated version, angularly equally spaced on the surface of the socket-holding end 9. In non-illustrated versions, the number of teeth is other than ten. Each tooth 10 comprises flanks 10A, 10B that are rectilinear and tilted with respect to the tooth axis 10 (Figure 6A) so that the tooth base 10, that is closer to axis X, is larger than its tip. A tilt angle δ (delta) between two flanks 10A, 10B is for example of about 24°. Referring to Figures 10 and 11, the socket 4 comprises a hollow body, having an operating end 11 by which the car wheel nut is engaged and a connecting end 12 by which socket 4 connects with the socket-holding shaft 3. The connecting end 12 comprises a hole 13 into which the socket-holding shaft 3 is fitted and the grooved profile P4, conformed to cooperate with the grooved profile P3 of the socket-holding shaft 3, is obtained on the walls of the hole 13. The grooved profile P4 comprises grooves 14, ten in number in the illustrated version, arranged to receive teeth 10 of the grooved profile P3. Therefore, grooves 14 are angularly equally spaced and define a same number of projections 15 alternating with grooves 14 thereof. The number of grooves can obviously be other than ten. Grooves 14 comprise walls 14A, 14B that are plane and tilted by an angle γ (gamma) which is the same as the tilt angle δ (delta) of flanks 10A, 10B of the teeth 10 of the profile P3. The depth of grooves 14, i.e. the distance between the bottom of the groove 14 and the crest of the projection 15 adjacent to the groove itself, is for instance 4.5 mm with a few tenths of a millimetre tolerance.

Profiles P3 and P4 have resistance sections of the tooth foot 10 on the socket-holding shaft 3 side and of the projections 15 on the socket 4 side that are equal between them. The constant section of the foot of the tooth 10 and of the foot of the projection 15 allows to have an extremely balanced mounted assembly at rotation. Furthermore, the described geometry allows a more harmonic distribution of tensions resulting in unbalanced deformations not occurring especially on the socket 4.

When profiles P3 and P4 are coupled, the mutual distance between the flanks of teeth 10 and the walls of the grooves 14 is rather low in the order of 0.10-0.20 mm or lower, while the crest of teeth 10 remains distant from the bottom of grooves 14 of about 0.50 mm. Available clearance allows an efficient torque transmission between socket-holding shaft 3 and socket 4, enabling at the same time to easily remove the socket 4 from the socket-holding shaft 3, for example, to be replaced.

Referring to Figure 12 and Figures 6-9, in order to movably fix the socket 4 to the socket-holding shaft 3, the fixing element 5 comprises a threaded portion 5B, in form of threaded stem, arranged to engage into a threaded hole 7 (Figure 6) obtained in the socket-holding end 9 of the socket-holding shaft 3. The threaded hole 7 is coaxial with axis X of the socket-holding shaft 3 and comprises a more internal threaded region and a stop surface 21 against which the fixing element 5 or the retaining member 6 can abut once mounted with the socket 4. The fixing element 5 further comprises a head 5A arranged to interact with an inner part of the socket 4 to restrain the socket 4 on the socket-holding shaft 3. The fixing element 5 serves substantially as a screw and the force it exerts in direction of the axis X corresponds to the clamping axial force of the fixing element 5 with which the socket 4 is constrained once mounted on the socket-holding shaft 3. On the head 5A the fixing element 5 has a hollow section 18, for example hexagonal in section, to receive a known clamping tool, for example an Allen key. An annular recess 19 arranged to receive the retaining member 6 is provided on the head 5A in an underhead region of the fixing element 5.

As indicated above, the torque transmission is implemented by grooved profiles P3 and P4. By contrast the axiality of the socket 4 with respect to the axis X of the socket-holding shaft is obtained by means of conical couplings. As shown in Figure 12, a first pair of coupling conical surfaces V-B is provided, one conical surface V of which is provided on the head 5A of the fixing element 5, a further conical surface B1 is provided on an inner part 16 of the connecting end 12 of the socket 4 where the hole 13 ends up in a cavity 20 of the socket 4, such cavity 20 being arranged to house the motorsport nut which must be screwed or unscrewed. In the section view of Figure 12, conical surfaces V and B1 of the first pair of coupling conical surfaces V-B have a same vertex angle α (alpha), which is in particular of about 60°, being the vertex arranged in direction of the socket-holding shaft 3. It is further provided a second pair of coupling conical surfaces B-A, a conical surface B2 of which is obtained on the socket 4 and a further conical surface A is obtained on the socket-holding shaft 3 at an inlet aperture 17 of the hole 13. In section view of Figure 12, conical surfaces B2 and A of the second pair of coupling conical surfaces B-A have a same vertex angle β (beta), which is in particular equal to vertex angle α (alpha) of the first pair of conical surfaces V-B, for example of about 60°. The vertex of angle β (beta) is arranged in direction of cavity 20 of the socket 4.

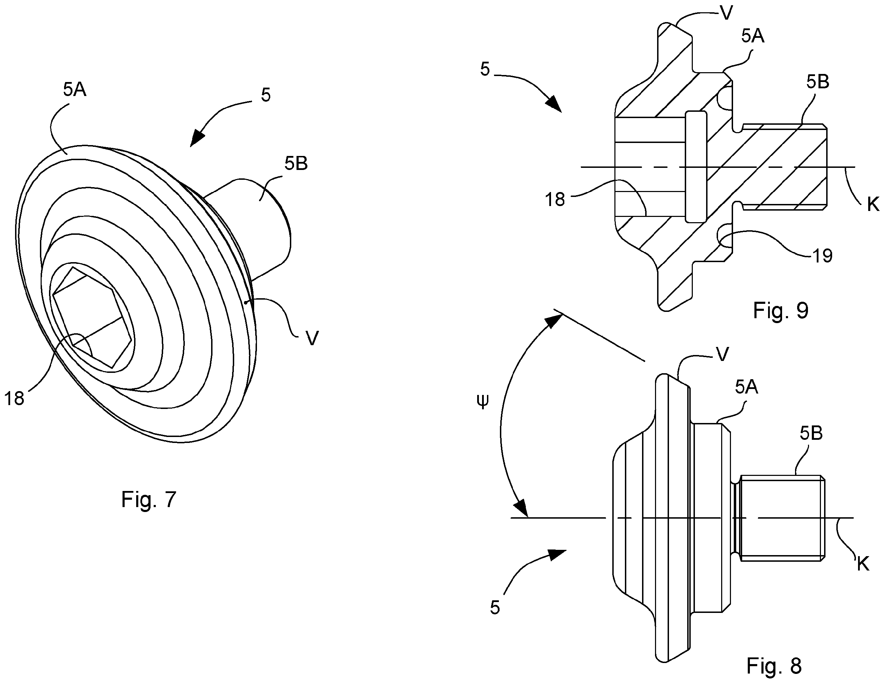

Centering is obtained by means of the two pairs of conical couplings clamped by means of the fixing element 5. These conical couplings have no interference and are extremely precise. In fact, the angle ϕ (phi) (Figure 5) which, in an axial section the conical surface A of the socket-holding shaft 3 forms with the axis X, is of 30° with +0.00° to +0.05° tolerance; furthermore, the conical surface A has a linear tolerance of 0.05 mm and a circularity tolerance of 0.05 mm. Similarly, angle β2 (beta2) (Figure 10), that the conical surface B2 forms with an axis parallel to the J axis of the socket 4, is of 30° with -0.00° to -0.05° tolerance; furthermore, the conical surface B2 has a linear tolerance of 0.005 mm and a circularity tolerance of 0.005 mm. Similarly, the angle β1 (beta1) (Figure 10) that the conical surface B1 forms with an axis parallel to the J axis of the socket 4, is of 30° with -0.00° to -0.05° tolerance; furthermore, the conical surface B1 has a linear tolerance of 0.005 mm and a circularity tolerance of 0.005 mm. Similarly, angle ψ (psi) (Figure 8) which the conical surface V forms with an axis parallel to the K axis of the fixing element 5, is of about 30° with +0.0° to +0.5° tolerance; furthermore, the conical surface V has a linear tolerance of 0.005 mm and a circularity tolerance of 0.005 mm.

Centering by means of pairs of conical surfaces substantially allows to reduce an axial clearance to zero, i.e. along axis X, between socket 4 and socket-holding shaft 3.

The retaining member 6 is interposed between the fixing element 5 and the socket-holding shaft 3 and is housed in the annular recess 19 and is in contact with a stop surface 21 to prevent unscrewing the fixing element 5 itself and creating a dampening micro-effect.

As indicated above, the configuration of the socket-shaft connection assembly 1 allows torque transmission by means of grooved profiles P3 and P4 with no centering made therefrom. By contrast, centering is obtained by the conical pairs V-B, B-A when they are clamped by the fixing element 5. Part of the torsion motion is transmitted by friction also on the centering conical pairs V-B, B-A, thereby relieving grooved profiles P3 and P4 from loads applied on teeth 10 and protrusions 15 when the high speed pneumatic impact wrench 2 is in function. It must be noted that 10000-12000 rpm of the pneumatic impact wrench 2, corresponding to the free number of revolutions, i.e. with no engagement between socket and nut, becomes of the order of 4000 rpm in the working condition.

Furthermore, the socket 4 in the working condition is substantially aligned to the ideal axis of the nut to be screwed or unscrewed, this limiting swinging due to eccentricity or tilts with respect to the axis of the socket-holding shaft. This results in a lower rotation radial effect with a more precise engagement of the nut; the pneumatic impact wrench thus becomes more handy.

By significantly reducing swinging of the socket, return stresses on the abutting part of the pneumatic impact wrench are consequently reduced resulting, over time, in a reduced wear if compared to the traditional type of connection with square shaft. In other words, owing to the socket-shaft connection assembly 1 the working life of the wrench components, as well as that of the socket-holding shaft, has increased.

Furthermore, owing to the socket-shaft connection assembly 1, mounting the socket 4 on the socket-holding shaft 3 is easy and quick.

With respect to the square coupling, the socket-shaft connection assembly 1 allows to reduce local stresses caused by torsion and to highly distribute them thus resulting in a reduction of local deformations.

The coupling symmetry, wherein the resistant sections on socket and socket-holding shaft are substantially equal, involves a propagation of tensions that is also symmetrical, thereby points of crack initiation are reduced with consequent increase of the average life of the more stressed components.

It must be noted that during a motorsport pit stop, the wheel nut is screwed in an application time of about 11-15 hundredths of a second and is unscrewed in 9 hundredths of a second, with a nominal working pressure of the supply air of the pneumatic impact wrench of 25 bars; the maximum torque generated by unscrewing is of 4300 Nm, in case of a traditional square coupling.

Owing to the socket-shaft connection assembly 1 it is possible to reduce or even overcome problems connected to the use of the square profile in the traditional-type socket-shaft coupling, with reduction of vibrations and swinging of the socket.

Furthermore, experiments show that the socket-shaft connection assembly 1 allows to obtain an efficient torque transmission and has a high mechanical resistance and to maintain ease of assembling and removal of sockets of traditional systems.

Furthermore, the durability of the assembly components as well as of the pneumatic impact wrench is increased.

The skilled in the art recognises that the solution of surfaces with grooved profiles for torque transmission distinct from centering coupling conical surfaces, herein described in relation to a single-nut socket, can be adopted even as a solution for socket-shaft coupling for a different type of socket of the motorsport sector.

In the following, examples of socket-shaft connection assembly are disclosed.

Example 1: there is provided a socket-shaft connection assembly for motorsport pneumatic impact wrench (2) comprising a socket-holding shaft (3), a socket (4), a fixing element (5) for connecting said socket (4) to said socket-holding shaft (3) along an axis (X) of said socket-holding shaft (3), wherein:
said socket-holding shaft (3) and said socket (4) comprise respective grooved profiles (P3, P4) cooperating for torque transmission between said socket-holding shaft (3) and said socket (4);
said fixing element is conformed to exert a force in the direction of the axis of the socket-holding shaft (3) to connect said socket (4) to said socket-holding shaft (3);
on said fixing element (5), on said socket-holding shaft (3) on said socket (4) a plurality of coupling conical surfaces (V-B, B-A) are obtained for centering said socket (4) on said socket-holding shaft (3), wherein said coupling conical surfaces (V-B, B-A) are distinct from said grooved profiles (P3, P4).

Example 2: there is provided a socket-shaft connection assembly (1) according to Example 1, wherein said fixing element (5) comprises a threaded portion (5B) arranged to engage in a threaded hole (7) provided in said socket-holding shaft (3) to connect said socket (4) to said socket-holding shaft (3), said threaded hole (7) being aligned with the axis of said socket-holding shaft (3).

Example 3: there is provided a socket-shaft connection assembly (1) according to Example 2, wherein in an underhead region of the fixing element (5) an annular recess (19) is provided that is arranged to receive a retaining member (6) to maintain said threaded portion (5B) in engagement position with said threaded hole (7).

Example 4: there is provided a socket-shaft connection assembly (1) according to any one of Examples 1 to 3, wherein said grooved profiles (P3, P4) comprise teeth (10) obtained on said socket-holding shaft (3) and grooves (14) obtained in an inner surface of said socket (4), wherein flanks (10A, 10B) of said teeth (10) and walls (14A, 14B) of said grooves (14) are plane and tilted.

Example 5: there is provided a socket-shaft connection assembly (1) according to Example 4, wherein a tilt angle (δ (delta)) of said teeth and a tilt angle (γ (gamma)) of said walls are equal to about 24°.

Example 6: there is provided a socket-shaft connection assembly (1) according to any one of the preceding Examples, wherein said plurality of coupling conical surfaces (V-B, B-A) comprises a first pair of conical surfaces (V, B1) respectively obtained on said socket (4) and on said fixing element (5) and a second pair of conical surfaces (A, B2) respectively obtained on said socket-holding shaft (3) and on said socket (4).

Example 7: there is provided a socket-shaft connection assembly (1) according to Example 6, wherein with respect to an axial section plane said first pair of conical surfaces (V, B1) has a vertex angle (α (alpha)) equal to a further vertex angle (β (beta)) of said second pair of conical surfaces (B2, A).

Example 8: there is provided a socket-shaft connection assembly (1) according to Example 7, wherein said vertex angle is of about 30°.

Example 9: there is provided a socket-shaft connection assembly (1) according to any one of the preceding Examples, wherein said socket (4) is conformed to engage a nut for motorsport single-nut wheels.

In the following examples of sockets are disclosed.

According to Example 10, there is provided a motorsport pneumatic impact wrench (2) socket arranged to be connected to a socket-holding shaft (3) of said pneumatic impact wrench (2) along an axis (X), wherein said socket (4) is provided with:
- a grooved profile (P4) arranged to cooperate with a respective grooved profile (P3) of said socket-holding shaft (3) for torque transmission between said socket-holding shaft (3) and said socket (4);
- a connecting end (12) conformed to receive said socket-holding shaft (3) and a fixing element (5) along said axis (X) to connect said socket (4) to said socket-holding shaft (3);
- a first coupling conical surface (B1) arranged to couple with a correspondent conical surface (V) of said fixing element (5) and a second coupling conical surface (B2) arranged to couple with said socket-holding shaft (3) for centering said socket (4), wherein said first coupling conical surface (B1) and said second coupling conical surface (B2) are distinct from said grooved profile (P3).

Example 11: there is provided a socket (4) according to Example 10, wherein said grooved profile (P4) comprises grooves (14) obtained in an inner surface of said socket (4), wherein walls (14A, 14B) of said grooves (14) are plane and tilted and arranged to interact with flanks (10A, 10B) of teeth (10) obtained on said socket-holding shaft (3).

Example 12: there is provided a socket (4) according to Example 11, wherein a tilt angle (γ (gamma)) of said walls (14A, 14B) is of about 24°.

Example 13: there is provided a socket (4) according to Example 11 or Example 12, wherein said grooves (14) are angularly equally spaced on said inner surface.

Example 14: there is provided a socket (4) according to Example 13, wherein said grooves (14) are ten in number.

Example 15: there is provided a socket (4) according to any one of Examples 10 to 14, wherein said first and second coupling conical surfaces (B1, B2) have a vertex angle (α (alpha), β (beta)) of about 30°.

## Claims

1. A socket-holding shaft for motorsport pneumatic impact wrench (2) arranged to receive a socket (4) along an axis thereof (X), **characterized in that** it is provided with:
- a grooved profile (P3) arranged to cooperate with a respective grooved profile (P4) of said socket (4) for torque transmission between said socket-holding shaft (3) and said socket (4);
- a socket-holding end (9) conformed to receive a fixing element (5) along said axis (X) to connect said socket (4) to said socket-holding shaft (3);
- a coupling conical surface (A) arranged to couple with a correspondent conical surface (B2) on said socket (4) for centering said socket (4), wherein said coupling conical surface (A) is distinct from said grooved profile (P3).

2. The socket-holding shaft (3) according to claim 1, wherein said socket-holding end (9) comprises a threaded hole (7) arranged to receive a threaded portion (5B) of said fixing element (5) to connect said socket (4) to said socket-holding shaft (3), said threaded hole (7) being aligned with the axis of said socket-holding shaft (3).

3. The socket-holding shaft (3) according to claim 1 or 2, wherein said grooved profile (P3) comprises teeth (10) obtained on said socket-holding shaft (3), wherein flanks (10A, 10B) of said teeth (10) are plane and tilted and arranged to interact with walls (14A, 14B) of grooves (14) obtained in an inner surface of said socket (4).

4. The socket-holding shaft (3) according to claim 3, wherein a tilt angle (δ (delta)) of said teeth is equal to about 24°.

5. The socket-holding shaft (3) according to claim 3 or 4, wherein said teeth (10) are angularly equally spaced on said socket-holding end (9).

6. The socket-holding shaft (3) according to claim 5, wherein said teeth (10) are ten in number.

7. The socket-holding shaft (3) according to any one of claims 1 to 6, wherein said coupling conical surface (A) has a vertex angle (β (beta)) of about 30°.
